# EUROPÄISCHE PATENTANMELDUNG

(11) **EP 2 821 811 A1**
(43) Veröffentlichungstag der Anmeldung: **07.01.2015**
(21) Anmeldenummer: 14172972.3
(22) Anmeldetag: 18.06.2014
(51) Int. Cl.: G01S 13/93, B60T 7/22, B60W 30/18

(54) **Rückfahr-Hilfsvorrichtung**

(30) Priorität: 01.07.2013 DE 102013106878
(71) Anmelder: BPW Bergische Achsen KG, 51674 Wiehl (DE)
(72) Erfinder: Schneider, Peter, 51597 Morsbach (DE)
(74) Vertreter: Bungartz Christophersen Partnerschaft mbB Patentanwälte

(57) **Zusammenfassung**

Vorgeschlagen wird eine Rückfahr-Hilfsvorrichtung für ein mit einer ebenen Ladefläche versehenes Fahrzeug, insbesondere für einen Nutzfahrzeuganhänger oder -auflieger, mit einer am Fahrzeugheck angeordneten Abstandssensorik und einer Auswerteeinheit zum Verarbeiten der von der Abstandssensorik gelieferten elektrischen Signale. Um eine ein punktgenaues Zurücksetzen ermöglichende Rückfahr-Hilfsvorrichtung zu schaffen, mit der sich über einen großen Distanzbereich exakt der noch verbleibende Abstand bis zu einer Laderampe erfassen lässt, setzt sich die Abstandssensorik aus einem berührungslos arbeitenden Abstandssensor (10) und aus mindestens einem auf mechanischen Kontakt sensibilisierten Nahbereichssensor (11) zusammen, wobei die Auswerteeinheit dazu ausgebildet ist, elektrische Signale sowohl des Abstandssensors (10) als auch des Nahbereichssensors (11) zu verarbeiten.

## Beschreibung

Die Erfindung betrifft eine Rückfahr-Hilfsvorrichtung für ein mit einer ebenen Ladefläche versehenes Fahrzeug, insbesondere einen Nutzfahrzeuganhänger oder -auflieger, mit einer am Fahrzeugheck angeordneten Abstandssensorik und einer Auswerteeinheit zum Verarbeiten der von der Abstandssensorik gelieferten elektrischen Signale.

Rückfahr-Hilfsvorrichtungen bei Nutzfahrzeugen dienen der Fahrerunterstützung während des Zurücksetzens des Nutzfahrzeuges gegen eine starre Laderampe. Vor allem für Fahrer eines Fahrzeugverbandes aus Zugfahrzeug und Anhänger bzw. Sattelauflieger ist es aufgrund der großen Abstände schwierig, den beim Zurücksetzen des Fahrzeug noch verbleibenden Abstand zwischen dem Heck des Fahrzeugs und der Laderampe zu erkennen. Der Heckbereich des Fahrzeuges ist für den Fahrer, sofern nicht mit Videosystemen gearbeitet wird, nicht einsehbar.

In solchen Situationen helfen gattungsgemäße Rückfahr-Hilfsvorrichtungen mit Abstandssensorik, wie sie z. B. aus der EP 0 972 679 A2 bekannt sind. Als Abstandssensorik dient hier ein Ultraschallsystem, das in der Lage ist, den Abstand zu Objekten im Fahrzeugheckbereich zu sensieren und diesen Abstand entweder dem Fahrer anzuzeigen, oder per Steuerkommando an eine fahrzeugseitig vorhandene Bremssteuereinheit eine Warnbremsung auszulösen.

Von Nachteil ist, dass die dann noch verbleibende restliche Distanz zur Laderampe durch vorsichtiges Zurücksetzen "ertastet" werden muss. Bei den meisten für die Abstandssensorik verwendeten Distanzsystemen lassen sich zwar mittlere Distanzen von z. B. 0,3 - 5 m gut detektieren, hingegen sehr geringe Abstände nicht mehr. Aber selbst Systeme die in der Lage sind, auch sehr kleine Abstände zu sensieren, erfassen stets nur das allgemein nächstgelegene Objekt, und nicht unbedingt das "richtige" Objekt. Laderampen sind aber häufig zu drei Seiten hin durch flexible Vorhänge begrenzt. Ohne Fahrzeug ragen solche Vorhänge weiter nach außen, als die eigentliche Ladekante. Aufgrund dieser Gegebenheiten kann es bei Sensoriksystemen zu einer Abstandsmessung zu diesen Vorhängen kommen, nicht jedoch, was für ein punktgenaues Zurücksetzen erforderlich wäre, zur Vorderkante der Laderampe.

Der Erfindung liegt daher die Aufgabe zugrunde, eine ein punktgenaues Zurücksetzen ermöglichende Rückfahrhilfe zu schaffen, mit der sich über einen großen Distanzbereich der verbleibende Abstand bis zu einer Laderampe erfassen lässt.

Zur Lösung wird bei einer Rückfahr-Hilfsvorrichtung mit den eingangs angegebenen Merkmalen vorgeschlagen, dass sich die Abstandssensorik aus einem berührungslos arbeitenden Abstandssensor und aus mindestens einem auf mechanischen Kontakt sensibilisierten Nahbereichssensor zusammensetzt, und dass die Auswerteeinheit dazu ausgebildet ist, elektrische Signale sowohl des Abstandssensors als auch des Nahbereichssensors zu verarbeiten.

Eine solche Rückfahrhilfe arbeitet daher in zwei nicht deckungsgleichen Distanzbereichen. Solange der Abstand beim Zurücksetzen des Fahrzeuges noch größer ist, erfolgt die Distanzerfassung ausschließlich durch den berührungslos arbeitenden Abstandssensor. Dies kann z. B. ein Ultraschallsensor sein, oder ein mit Laser arbeitendes Abstandsgerät. Die elektrischen Signale des berührungslos arbeitenden Abstandssensors werden durch die Auswerteeinheit entweder zu entsprechenden Distanzsignalen verarbeitet, die dem Fahrer z. B. in Form eines Abstandsbalkens grafisch angezeigt werden. Alternativ kann das elektrische Signal des berührungslos arbeitenden Abstandssensors zu einem Warnsignal verarbeitet werden, z. B. zu einem akustischen Warnsignal. Weiterhin besteht die Möglichkeit, dass die Auswerteeinheit die elektrischen Signale des berührungslos arbeitenden Abstandssensors zu einem Distanzsignal verarbeitet, welches von einer Bremssteuereinheit des Fahrzeuges zu Bremssteuersignalen verarbeitet wird, um so z. B. ein leichtes Abbremsen des Fahrzeuges einzuleiten.

Bei weiterer Annäherung des Fahrzeughecks an die Laderampe liefert der berührungslos arbeitende Abstandssensor keine verlässlichen Resultate mehr. Daher umfasst die Abstandssensorik zusätzlich mindestens einen auf mechanischen Kontakt sensibilisierten und vorzugsweise in einer Höhe etwas unterhalb der Ladefläche am Fahrzeugheck angeordneten Nahbereichssensor. Dieser arbeitet im Zentimeterbereich, weshalb das von ihm erzeugte elektrische Signal als Stoppsignal interpretiert wird, welches den Fahrer auffordert, die Rückwärtsfahrt unmittelbar zu beenden. Auch das Signal des Nahbereichssensors gelangt zu der Auswerteeinheit und wird von dieser, ebenso wie das Signal des berührungslos arbeitenden Abstandssensors, verarbeitet. Da das Signal des Nahbereichssensors jedoch für eine bereits abgeschlossene Annäherung steht, ist die Verarbeitung des von dem Nahbereichssensor kommenden Signals in der Auswerteeinheit anders. So wird z. B. die Auswerteeinheit beim Empfangen dieses Signals einen Befehl zum sofortigen Stoppen des Fahrzeuges setzen. Dies kann ein akustisches Signal sein, ein vom Fahrer sofort erfassbares optisches Signal., oder ein sofortiges vollständiges Abbremsen des Fahrzeugs mittels einer bordeigenen Bremssteuereinrichtung.

Die erfindungsgemäße Rückfahr-Hilfsvorrichtung ermöglicht daher über einen weiten Bereich der Annäherung ein punktgenaues Zurücksetzen bis an eine Laderampe. Zusätzlich besteht die Möglichkeit, bei Erreichen dieses Punktes automatisch abzubremsen, vorzugsweise durch die signaltechnische Verknüpfung mit der im Fahrzeug ohnehin vorhandenen Bremssteuereinheit für die Fahrzeugbremsen. Durch die Anordnung des Nahbereichssensors in einer Höhe unterhalb der Ladefläche des Fahrzeuges, welche Höhe zugleich der bauseitigen Höhe üblicher Laderampen entspricht, erfolgt die Abstandsmessung nur gegenüber dem entscheidenden Ort, d. h. der Vorderseite der Laderampe. Etwaige weitere Objekte und insbesondere Portale mit abdichtenden Vorhängen werden nicht erfasst und können daher während des Zurücksetzens nicht zu Irritationen führen. Der Nahbereichssensor spricht hierzu erst ab einer vorbestimmten Gegenkraft an.

Sofern das Fahrzeug mit einer Bremssteuereinheit für die Fahrzeugbremsen versehen ist, ist diese dazu ausgebildet, die Distanzsignale der Auswerteeinheit zu Bremssteuersignalen zu verarbeiten. Auf diese Weise wird das Fahrzeug automatisch abgebremst bzw. merkt der Fahrer an der Verzögerung des Fahrzeuges, dass eine Annäherung unmittelbar bevorsteht.

Eine Ausgestaltung ist gekennzeichnet durch zwei in derselben Höhe angeordnete Nahbereichssensoren, von denen sich der erste Nahbereichssensor links, und der zweite Nahbereichssensor rechts der Fahrzeugmitte befindet. Der Vorteil dieser Ausgestaltung liegt in der exakteren Arbeitsweise bei einem nicht geraden Zurücksetzen des Fahrzeuges. Ist z. B. der verbliebene Restabstand am linken Teil des Fahrzeughecks größer als am rechten Teil des Fahrzeughecks, kommt der Erstkontakt an dem links der Fahrzeugmitte angeordneten Nahbereichssensor zustande. Das hierbei ausgelöste Signal wird in der Auswerteeinheit als Stoppsignal selbst dann interpretiert, wenn von dem anderen Nahbereichssensor kein entsprechendes Signal vorliegt. Denn jedes weitere Zurücksetzen würde zwangsläufig zu einer schädlichen Kollision mit der Laderampe führen, auch wenn der andere, hier der rechts der Fahrzeugmitte angeordnete Nahbereichssensor noch keinen Kontakt hat.

Im Fall des Einsatzes zweier Nahbereichssensoren beträgt der seitliche Abstand der beiden Sensoren zu den Fahrzeugseiten maximal 75 cm, vorzugsweise maximal 30 cm.

Mit einer weiteren Ausgestaltung wird vorgeschlagen, dass sich der Nahbereichssensor aus einem Gehäuse und darin aufgenommenen Messelementen zusammensetzt, wobei das Gehäuse zweiteilig aus einem fahrzeugfest montierten Innenteil und einem mit einer Kontaktfläche zur Umgebung versehenen Außenteil aufgebaut ist, und das Außenteil gegenüber dem Innenteil in Fahrzeuglängsrichtung beweglich oder verformbar ausgebildet ist.

Mit einer weiteren Ausgestaltung wird vorgeschlagen, dass das Außenteil zumindest teilweise als ein zum Fahrzeug hin elastisch verformbarer Elastomerkörper ausgebildet ist.

Eine weitere Ausgestaltung ist gekennzeichnet durch ein in dem Gehäuse des Nahbereichssensors eingeschlossenes Luftvolumen und durch ein Messelement, welches als Strömungs- oder Drucksensor zu Erfassung einer Verringerung oder einer Komprimierung des Luftvolumens ausgebildet ist. Ein so ausgebildeter Nahbereichssensor eignet sich besonders Weise für eine Bauart, bei der er sich einheitlich über die gesamte Fahrzeugbreite oder zumindest einen großen Teil der Fahrzeugbreite erstreckt. Dies hat den Vorteil, dass sowohl ein punktueller Kontakt wie ein einseitiger oder aber auch ein mittiger Kontakt mit der Umgebung erfasst wird, sofern der Nahbereichssensor über ein einziges, langgestrecktes Volumen zwischen Innenteil und Außenteil verfügt. Es ist nur ein einziges Messelement zur Signalerfassung notwendig

Weitere Vorteile und Einzelheiten ergeben sich aus der nachfolgenden Beschreibung eines auf der Zeichnung wiedergegebenen Ausführungsbeispiels. Darin zeigen:
- Fig. 1: eine Heckansicht eines Nutzfahrzeuganhängers oder eines Sattelaufliegers;
- Fig. 2: eine Seitenansicht der rückseitigen Fahrzeugecke entsprechend der in Fig. 1 eingetragenen Blickrichtung II;
- Fig. 3: in einer ersten Ausführungsform einen Schnitt durch einen am Fahrzeugheck angeordneten Nahbereichssensor und
- Fig. 4: in einer zweiten Ausführungsform einen Schnitt durch einen am Fahrzeugheck angeordneten Nahbereichssensor.

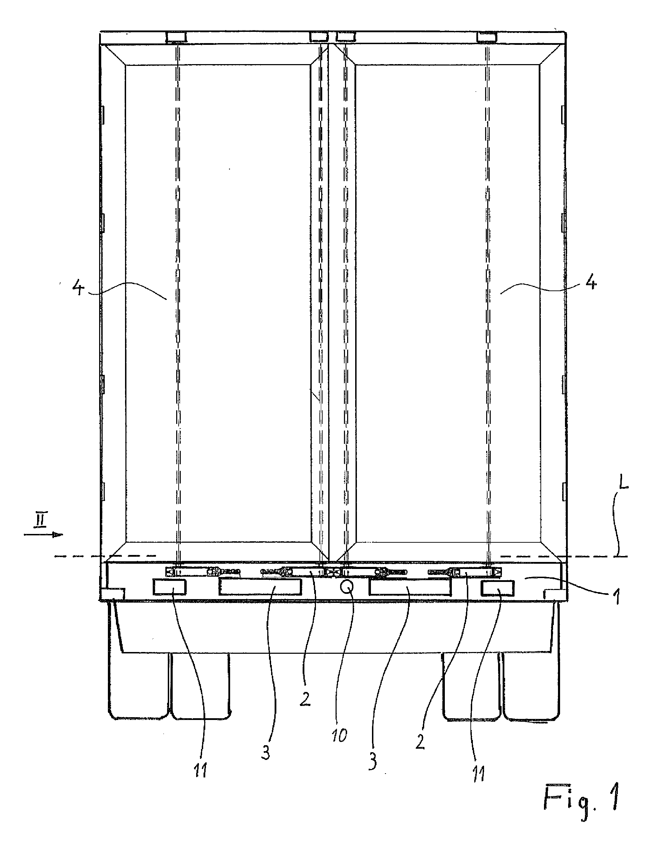

Die Fig. 1 zeigt die Heckansicht eines Nutzfahrzeuganhängers oder eines Sattelaufliegers. Gestrichelt eingezeichnet ist die ebene Ladefläche L im Inneren des Anhängers. Diese befindet sich in etwa in derselben Höhe, wie eine durch Zurücksetzen anzufahrende Laderampe eines Gebäudes, z. B. der Halle einer Spedition.

Das Fahrzeug ist unterhalb seiner Ladefläche L mit einem heckseitigen Abschlussblech 1 versehen. Das Abschlussblech 1 ist Teil der Statik des Nutzfahrzeugaufbaus und dient z. B. zur Befestigung der Verschlusseinrichtungen 2 für die Türflügel 4 des Nutzfahrzeugaufbaus. Des weiteren dient das sich über die gesamte Fahrzeugbreite erstreckende Abschlussblech 1 dazu, sogenannte Rammpuffer 3 zu befestigen. Die üblicherweise als Quader gestalteten Rammpuffer 3 bestehen zumeist aus einem elastischen Material, d. h. Elastomer, und dienen dazu, das Fahrzeug bei Rückwärtsfahrt vor Beschädigungen infolge des Aufpralls auf ein Hindernis und insbesondere die Laderampe zu schützen. Entsprechend befinden sich die Rammpuffer 3 in einer Höhe unmittelbar unterhalb der üblichen Höhe L der Laderampe.

Als Rückfahrhilfe beim Zurücksetzen des Fahrzeugs ist das Fahrzeug mit einer bordeigenen Rückfahr-Hilfsvorrichtung versehen, einschließlich einer im Bereich des Abschlussblechs 1 angeordneten Abstandssensorik sowie einer ggf. an anderer Stelle im Fahrzeug angeordneten Auswerteeinheit zum Verarbeiten der von der Abstandssensorik gelieferten elektrischen Signale und zur Abgabe eines Distanzsignals oder eines Warnsignals.

Die bordeigene Abstandssensorik besteht aus zwei sich ergänzenden Systemen und umfasst einen berührungslos arbeitenden Abstandssensor 10 und Nahbereichssensoren 11. Bei dem hier beschriebenen Ausführungsbeispiel ist der Abstandssensor 10 nur einmal vorhanden, jedoch ist auch eine Mehrfachbestückung möglich. Der Abstandssensor 10 ist vorzugsweise als Ultraschallsensor ausgebildet, d. h. er sendet ein Schallsignal aus und gibt bei Empfang einer Reflexion dieses Schallsignals ein Rückmeldesignal an die bordeigene Auswerteeinheit. Aus der zeitlichen Differenz zwischen der Schallabgabe und dem Rückmeldesignal kann in bekannter Weise auf den Abstand zwischen dem Abstandssensor 10 und einem Hindernis geschlossen werden.

Weiterer Bestandteil der bordeigenen Abstandssensorik ist mindestens ein Nahbereichssensor 11. Der Nahbereichssensor 11 ist am Abschlussblech 1 befestigt, wobei er in einer Höhe unterhalb und vorzugsweise geringfügig unterhalb der Höhe der Ladefläche L und damit der Laderampe angeordnet ist.

Bei der Ausführungsform nach Fig. 1 ist ein erster Nahbereichssensor 11 links der Fahrzeugmitte und in der Nähe der linken Seitenwand des Fahrzeugs, und ein zweiter Nahbereichssensor 11 rechts der Fahrzeugmitte und nahe der rechten Fahrzeugseite angeordnet. Durch den Einsatz von Nahbereichssensoren 11 auf beiden Seiten werden verwertbare Abstandssignale auch dann erhalten, wenn das Fahrzeug sich der Laderampe nicht exakt rechtwinklig nähert, sondern leicht schräg.

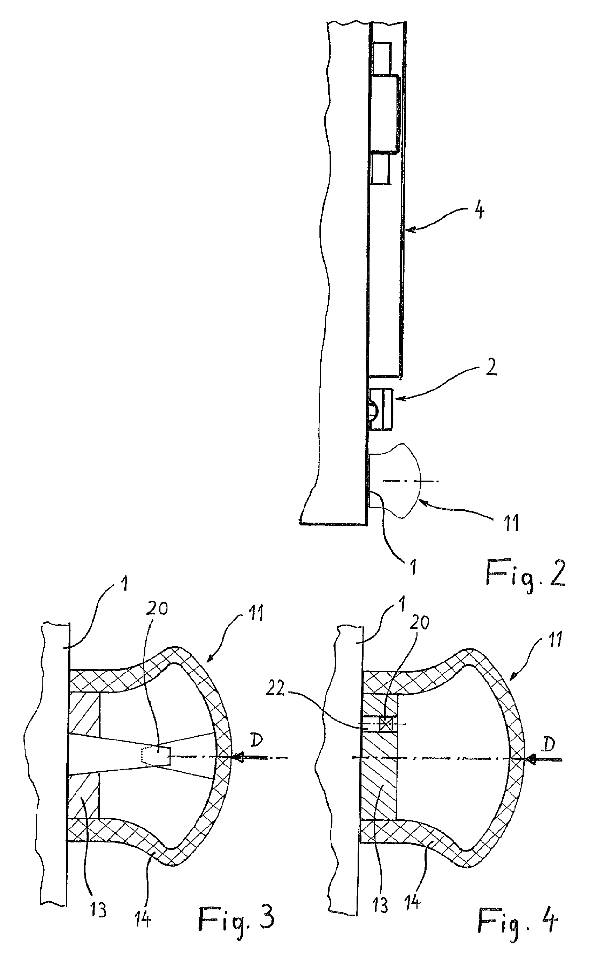

Im Gegensatz zu dem Abstandssensor 10 arbeitet der Nahbereichssensor 11 nicht auf mittlere Distanz, sondern er ist auf unmittelbaren mechanischen Kontakt sensibilisiert. Mögliche Ausführungsformen werden im Folgenden anhand der Fig. 3 und der Fig. 4 erläutert, die jeweils einen vertikalen Schnitt durch einen Nahbereichssensor 11 zeigen.

Bestandteile des Nahbereichssensors 11 sind ein Gehäuse und darin aufgenommene Messelemente, die bei Fig. 3 einerseits und Fig. 4 andererseits unterschiedlich ausgebildet sind. Das Gehäuse ist zweiteilig gestaltet mit einem am Abschlussblech 1 fest montierten Innenteil 13 und einem Außenteil 14. Zur Vermeidung eines Eintritts von Feuchtigkeit und Schmutz sind Innenteil 13 und Außenteil 14 zueinander abgedichtet oder durch Stoffschluss miteinander verbunden. Das Außenteil 14 ist als ein zum Abschlussblech 1 des Fahrzeugs hin elastisch verformbarer, hohler Elastomerkörper ausgebildet. Bei einer äußeren Druckkraft D kommt es daher zu einer Verformung des elastisch nachgiebigen Außenteils 14, wobei der damit einhergehende Verformungsweg messtechnisch erfasst wird. Hierzu sind im Inneren des Gehäuses wegabhängig arbeitende Messelemente 20 angeordnet.

Bei der Ausführungsform nach Fig. 4 wird die Verformung des Außenteils 14 nicht als Weg erfasst, sondern es erfolgt eine Erfassung des von Innenteil 13 und Außenteil 14 eingeschlossenen Luftvolumens. Durch Stauchung des Außenteils 14 beim Kontakt mit der Laderampe kommt es zu einer Verringerung des eingeschlossenen Volumens, wobei Luft über einen Kanal 22, der hier in dem Innenteil 13 ausgebildet ist, ausströmt. Mittels des Messelements 20 wird die Luftströmung im Kanal 22 überwacht, und so ein elektrisches Signal an die bordeigene Auswerteeinheit gegeben.

Bei einer der Fig. 4 ähnlichen, alternativen Bauart des Nahbereichssensors 11 schließt dessen Gehäuse als geschlossener Druckraum ein Luftvolumen ein. Bei einer Druckkraft D kommt es zu einem Druckanstieg in diesem Druckraum, was durch ein Messelement erfasst wird, welches in diesem Fall als ein Drucksensor ausgebildet ist.

Die bordeigene Auswerteeinheit ist dazu ausgebildet, die elektrischen Signale sowohl des Abstandssensors 10, als auch die elektrischen Signale jedes der beiden Nahbereichssensoren 11 zu verarbeiten. Die Verarbeitung kann entweder durch entsprechende Erzeugung eines Distanzsignals oder eines unmittelbaren Warnsignals erfolgen. Letzteres kann z. B. ein dem Fahrer im Zugfahrzeug übermitteltes akustisches oder optisches Warnsignal sein.

Ergänzend oder alternativ kann das von der bordeigenen Auswerteeinheit erzeugte Distanzsignal einer bordeigenen Bremssteuereinheit für die Fahrzeugbremsen übermittelt werden. In diesem Fall ist die Bremssteuereinheit dazu ausgebildet, die von der Auswerteeinheit empfangenen Signale zu Bremssteuersignalen zu verarbeiten. So kann z. B. im Bereich der Annäherung zwischen 100 cm und 30 cm ein automatisches Betätigen der Fahrzeugbremsen erfolgen, wodurch sich zum einen die Fahrzeuggeschwindigkeit verringert, und zum anderen dem Fahrer die Annäherung an das rückseitige Objekt signalisiert wird. Kommt es jedoch, in der letzten Stufe der Annäherung, zu einer Signalabgabe über die Messelemente 20 eines der zwei Nahbereichssensoren 11 wird dies systemintern als sofortiges Stoppsignal gewertet. Dies kann entweder über ein Warnsignal an den Fahrer geschehen, oder durch ein Signal "Null Distanz" von der Auswerteeinheit an die Bremssteuereinheit, verbunden mit einem sofortigen starken Betätigen der Fahrzeugbremsen.

Zum besseren mechanischen Schutz der Nahbereichssensoren 11 können diese auch in die ohnehin vorhandenen Rammpuffer 3 baulich integriert sein. In diesem Fall verhindern die Rammpuffer 3 ein zu starkes und damit schädigendes Stauchen des Nahbereichssensors. Alternativ können die Gehäuseteile 13, 14 des Nahbereichssensors 11 so gestaltet sein, dass diese ab einem bestimmten Verformungsweg auf Block arbeiten, die Verformungsfähigkeit daher begrenzt ist.

Der Nahbereichssensor insbesondere in der in Figur 4 wiedergegebenen Bauweise kann auch als ein einzelner Sensor in der Weise ausgebildet sein, dass er sich einheitlich über die gesamte Fahrzeugbreite oder zumindest einen großen Teil der Fahrzeugbreite erstreckt. Dies hat den Vorteil, dass sowohl ein punktueller Kontakt wie ein einseitiger oder aber auch ein mittiger Kontakt mit der Umgebung erfasst wird, sofern der Nahbereichssensor 11 über ein einziges, langgestrecktes Volumen zwischen Innenteil 13 und Außenteil 14 verfügt. Zudem ist bei einer solchen Ausgestaltung nur ein einziges Messelement 20 notwendig. Trotzdem werden verwertbare Abstandssignale auch dann erhalten, wenn das Fahrzeug sich der Laderampe nicht exakt rechtwinklig nähert, sondern leicht schräg.

### Bezugszeichenliste

- 1: Abschlussblech
- 2: Verschlusseinrichtung
- 3: Rammpuffer
- 4: Türflügel
- 10: Abstandssensor
- 11: Nahbereichssensor
- 13: Innenteil
- 14: Außenteil
- 20: Messelement
- 22: Kanal

- D: Druckkraft
- L: Höhe Ladefläche, Höhe externe Laderampe

## Patentansprüche

1. Rückfahr-Hilfsvorrichtung für ein mit einer ebenen Ladefläche versehenes Fahrzeug, insbesondere einen Nutzfahrzeuganhänger oder -auflieger, mit einer am Fahrzeugheck angeordneten Abstandssensorik und einer Auswerteeinheit zum Verarbeiten der von der Abstandssensorik gelieferten elektrischen Signale, **dadurch gekennzeichnet, dass** sich die Abstandssensorik aus einem berührungslos arbeitenden Abstandssensor (10) und aus mindestens einem auf mechanischen Kontakt sensibilisierten Nahbereichssensor (11) zusammensetzt, und dass die Auswerteeinheit dazu ausgebildet ist, elektrische Signale sowohl des Abstandssensors (10) als auch des Nahbereichssensors (11) zu verarbeiten.

2. Rückfahr-Hilfsvorrichtung nach Anspruch 1, **dadurch gekennzeichnet, dass** das Fahrzeug mit einer Bremssteuereinheit für die Fahrzeugbremsen versehen ist, und die Bremssteuereinheit dazu ausgebildet ist, Signale der Auswerteeinheit zu Bremssteuersignalen zu verarbeiten.

3. Rückfahr-Hilfsvorrichtung nach Anspruch 1 oder 2, **gekennzeichnet durch** einen Ultraschallsensor als berührungslos arbeitender Abstandssensor (10).

4. Rückfahr-Hilfsvorrichtung nach einem der Ansprüche 1 bis 3, **gekennzeichnet durch** einen Nahbereichssensor, der sich über die gesamte oder nahezu die gesamte Fahrzeugbreite erstreckt.

5. Rückfahr-Hilfsvorrichtung nach einem der Ansprüche 1 bis 3, **gekennzeichnet durch** zwei auf derselben Höhe angeordnete Nahbereichssensoren (11), von denen sich der erste Nahbereichssensor (11) links der Fahrzeugmitte, und der zweite Nahbereichssensor (11) rechts der Fahrzeugmitte befindet.

6. Rückfahr-Hilfsvorrichtung nach Anspruch 5, **dadurch gekennzeichnet, dass** der seitliche Abstand der beiden Nahbereichssensoren (11) zu den Fahrzeugseiten maximal 75 cm beträgt, vorzugsweise maximal 30 cm.

7. Rückfahr-Hilfsvorrichtung nach einem der vorangehenden Ansprüche, **dadurch gekennzeichnet, dass** sich der Nahbereichssensor (11) aus einem Gehäuse und darin aufgenommenen Messelementen (20) zusammensetzt, wobei das Gehäuse zweiteilig aus einem fahrzeugfest montierten Innenteil (13) und einem mit einer Kontaktfläche zur Umgebung versehenen Außenteil (14) aufgebaut ist, und das Außenteil (14) gegenüber dem Innenteil (13) in Fahrzeuglängsrichtung beweglich oder verformbar ausgebildet ist.

8. Rückfahr-Hilfsvorrichtung nach Anspruch 7, **dadurch gekennzeichnet, dass** das Außenteil (14) zumindest teilweise als ein zum Fahrzeug hin elastisch verformbarer Elastomerkörper ausgebildet ist.

9. Rückfahr-Hilfsvorrichtung nach Anspruch 7 oder 8, **gekennzeichnet durch** ein in dem Gehäuse des Nahbereichssensors (11) eingeschlossenes Luftvolumen und **durch** ein Messelement (20), welches als Strömungs- oder Drucksensor zu Erfassung einer Verringerung oder einer Komprimierung des Luftvolumens ausgebildet ist.
